(19) Europäisches Patentamt
European Patent Office
Office européen des brevets

(11) EP 0 593 834 B1

(12) **EUROPÄISCHE PATENTSCHRIFT**

(45) Veröffentlichungstag und Bekanntmachung des Hinweises auf die Patenterteilung:
**21.05.1997 Patentblatt 1997/21**

(51) Int. Cl.[6]: **C02F 3/28**, C02F 3/30, C02F 3/10

(21) Anmeldenummer: **92810749.9**

(22) Anmeldetag: **06.10.1992**

(54) **Verfahren zur biologischen Reinigung von Wasser und Mittel zum Durchführen des Verfahrens**

Process and installation for the biological purification of water

Procédé et installation pour la purification biologique de l'eau

(84) Benannte Vertragsstaaten:
**AT CH DE ES FR GB IT LI SE**

(43) Veröffentlichungstag der Anmeldung:
**27.04.1994 Patentblatt 1994/17**

(73) Patentinhaber: **CT Umwelttechnik AG**
**CH-8404 Winterthur (CH)**

(72) Erfinder:
• **Ryhiner, Gerhard, Dr.**
**CH-8400 Winterthur (CH)**
• **Sörensen, Kim**
**CH-8037 Zürich (CH)**

• **Birou, Bernard, Dr.**
**CH-8400 Winterthur (CH)**

(74) Vertreter: **Heubeck, Bernhard**
**c/o Sulzer Management AG**
**KS Patente/0007**
**8401 Winterthur (CH)**

(56) Entgegenhaltungen:
**EP-A- 0 072 495      EP-A- 0 220 142**
**EP-A- 0 247 212      EP-A- 0 304 734**
**EP-A- 0 355 022      WO-A-92/04284**

## Beschreibung

Die Erfindung betrifft ein Verfahren gemäss Oberbegriff von Anspruch 1 und Mittel zum Durchführen des Verfahrens. Die Erfindung betrifft auch - gemäss dem unabhängigen Anspruch 5 - einen Biofilmreaktor, mit dem sich die Verfahrensstufe des ersten Reaktionsgefässes durchführen lässt.

Aus der EP-A-0 247 212 (= P.6039) ist ein gattungsgemässes Verfahren bekannt, bei dem durch Koppelung einer Nitrifikationsstufe mit einer vorgelagerten Denitrifikationsstufe Ammonium sowie organische Verunreinigungen in Abwasser durch Mikroorganismen abgebaut werden können. Die durch die Mikroorganismen gebildete Biomasse liegt in Form eines sogenannten Biofilms vor, der die Oberflächen der Füllkörper eines Festbetts bedeckt. Der Biofilmreaktor der ersten Stufe, in welchem die Denitrifikation stattfindet, weist eine heterogene Natur auf: In teils enger Nachbarschaft gibt es Gebiete, in denen einerseits aerobe und andererseits anoxische oder anaerobe Bedingungen herrschen. In den aeroben Gebieten erfolgt der Abbau des organischen Kohlenstoffs unter Verwendung des gelösten molekularen Sauerstoffs. In diesen Gebieten findet keine Denitrifikation statt. Diese erfolgt in den anoxischen Gebieten, indem dort der Nitratsauerstoff unter Freisetzen von molekularem Stickstoff (oder auch anderen Stickstoffverbindungen) durch die Biomasse genutzt wird. Beide Arten der Sauerstoffnutzung sind für Mikroorganismen der gleichen Spezies möglich; bei Mangel an molekularem Sauerstoff passen diese Mikroorganismen ihren Stoffwechsel an, indem sie zur Denitrifikation übergehen.

Durch ein grosses Angebot an organischem Kohlenstoff wird der biologische Abbau des Ammoniums gehemmt. Erst nach der in der ersten Stufe erfolgten Kohlenstoff-Elimination kann im belüfteten Biofilmreaktor der zweiten Stufe der Ammonium-Stickstoff durch nitrifizierende Mikroorganismen (sogenannte Nitrifikanten) in zunächst Nitrit und dann Nitrat oxidiert werden. Das Nitrat ist ein Zwischenprodukt, das - durch Denitrifikation - abgebaut werden soll. Ein Teil des nitrathaltigen Produktwassers der Nitrifikationsstufe wird zur ersten Stufe zurückgeführt. Da wegen der Belüftung der zweiten Stufe im rückgeführten Wasser molekularer Sauerstoff gelöst ist, kann sich im Eingangsbereich der ersten Stufe eine aerobe Zone ergeben, in der eine Denitrifikation erst in geringem Umfang abläuft. (Wie weiter unten anhand einer Figur näher erläutert wird, kann sich auch bei Anwesenheit von molekularem Sauerstoff innerhalb des Biofilms ein anoxisches Gebiet ausbilden, wo die erwünschte Denitrifikation stattfindet.) Ist der Vorrat an molekularem Sauerstoff in einiger Entfernung von der Einlaufstelle erschöpft, so setzt die Nutzung des Nitratsauerstoffs in vollem Umfang ein.

Der organische Kohlenstoff, d.h. der Kohlenstoff der in den biologisch abbaubaren Inhaltsstoffen des Abwassers enthalten ist, liegt teils in gelöster, teils in einer immobilen, in Schwebestoffen eingeschlossen Form vor. Dem biologischen Abbau im Biofilmreaktor zugänglich ist im wesentlichen nur der gelöste oder der aus den Schwebestoffe herauslösbare organische Kohlenstoff. Da die Schwebestoffe zum Teil auf dem Biofilm adsorbiert werden, erfolgt auch eine Eliminierung dieser in Form von suspendierten Feststoff-Teilchen oder Kolloiden gegebenen Verunreinigung.

Der gelöste organische Kohlenstoff liegt in leichter und schwerer abbaubaren Form vor. Leichtabbaubar sind die meisten niedermolekularen Alkohole (z.B. Methanol oder Ethanol), Säuren (z.B. Essigsäure), Aldehyde und einige komplexere Verbindungen (z.B. Glukose); schwerabbaubar sind Kolloide, hochmolekulare Verbindungen, Huminsäuren. Bei der Nutzung des Nitratsauerstoffs ist praktisch nur der leichter abbaubare Kohlenstoff eliminierbar. Es ist daher wichtig, dass die aerobe Zone im Einlaufbereich der Denitrifikationsstufe minimal gehalten wird. Denn auch dort erfolgt bevorzugt die Elimination des leichter abbaubaren Kohlenstoffs, wodurch das für die Denitrifikation geeignete Substrat teilweise verloren geht.

Bei dem bekannten Verfahren wird die Denitrifikation mittels eines bioaktiven Filters ausgeführt. Bei diesem Reaktortyp bedeckt der Biofilm ein körniges Trägermaterial, das in Form einer Schüttung das Festbett des ersten Reaktionsgefässes bildet. Das bioaktive Filter ist nebst dem biologischen Abbau auch für eine Beseitigung der Schwebestoffe geeignet; durch ein periodisch durchgeführtes Spülen des Festbetts mittels Luft und Wasser werden die auf dem Trägermaterial adsorbierten Schwebestoffe sowie ein Teil der wachsenden Biomasse als Überschussschlamm aus dem Reinigungsprozess entfernt.

Im zweiten Reaktionsgefäss ist das Festbett aus einer Packung von flächenartigen Elementen mit regelmässiger geometrischer Struktur (Elemente eines statischen Mischers) aufgebaut. Die den Biofilm bildenden Nitrifikanten weisen ein weit geringeres Wachstum als die Mikroorganismen der ersten Stufe auf; daher ist bei der zweiten Stufe ein Spülen weniger oft nötig.

Die Kohlenstoff-Elimination soll möglichst vollständig in der ersten Stufe erfolgen. Gleichzeitig soll dabei möglichst viel Nitrat durch Nutzung des Nitratsauerstoffs abgebaut werden. Nur ein Manko an Nitrat soll mittels einer ergänzenden Sauerstoffzufuhr ausgeglichen werden. Wenn der Ammoniumgehalt im Rohwasser keine konstante Grösse ist, ergibt sich folglich in der ersten Stufe bezüglich der Nitratmenge ein wechselndes Angebot und somit ist der Bedarf an molekularem Sauerstoff ebenfalls eine variable Grösse. Es ist Aufgabe der Erfindung, die erste Stufe in einer Weise auszubilden, dass in Bezug auf die ergänzende Sauerstoffzufuhr ein variables Angebot solcherart ermöglicht wird, dass die Denitrifikation durch den zugeführten Sauerstoff möglichst wenig beeinträchtigt wird. Diese Aufgabe ist durch die im kennzeichnenden Teil des Anspruchs 1 gegebenen Massnahmen lösbar.

Der mittels der Belüftung zugeführte Sauerstoff soll effizient und gleichmässig im Wasser gelöst werden.

Diese Forderung ist erfüllbar, wenn das Festbett gleich wie beim zweiten Reaktionsgefäss als Packung von statischen Mischerelementen ausgebildet wird (vgl. Anspruch 5).

Bei belüfteten Biofilmreaktoren mit körnigem Medium als Träger des Biofilms wird die Denitrifikation durch den eingetragenen Sauerstoff empfindlich beeinträchtigt. (siehe Laursen et al.,"Denitrification in submerged filters exposed to oxygen", 1992, Proceedings of European Conference on Natural Removal from Waste Water, University of Leeds UK, 1.-4.09.92). Im Gegensatz dazu hat die Belüftung eines aus statischen Mischerelementen bestehenden Festbetts eine vorteilhafte Wirkung (gemäss eigenen Versuchen; Belüftung rund 5 m/h, Nitratbeladung kleiner als 1 kg/m$^3$d): Der Nitratabbau wird gegenüber einem unbelüfteten Reaktor um rund 20% gesteigert. Dieser unerwartete Vorteil ergibt sich vermutlich dadurch, dass durch die Belüftung Turbulenzen erzeugt werden, die eine wesentliche Verbesserung des Nitrattransports aus dem Wasser in den Biofilm zur Folge haben. Im unbelüfteten Reaktor, in dem das Wasser laminar fliesst, beruht der Nitrattransport zum Biofilm weitgehend auf Diffusion und ist daher langsam.

Nachfolgend wird die Erfindung anhand von Zeichnungen näher erläutert. Es zeigen:

Fig. 1      eine Anlage mit einer Denitrifikations/Nitrifikations-Einrichtung,

Fig. 2      ein Beispiel von Konzentrationsverläufen in der Anlage von Fig.1,

Fig. 3      eine bekannte Einrichtung mit Belüftung in der ersten Stufe,

Fig. 4      einen Längsschnitt durch eine Packung mit statischen Mischerelementen,

Fig.5a,b    Konzentrationsverläufe im Biofilm (vereinfachte Modelldarstellung),

Fig. 6      eine erfindungsgemässe Einrichtung (ohne Darstellung der Spülungsmittel),

Fig. 7      einen erfindungsgemässen Biofilmreaktor mit Belüftung und

Fig.8a-c    Konzentrationsverläufe in vertikaler Richtung im denitrifizierenden Festbett des erfindungsgemässen Biofilmreaktors.

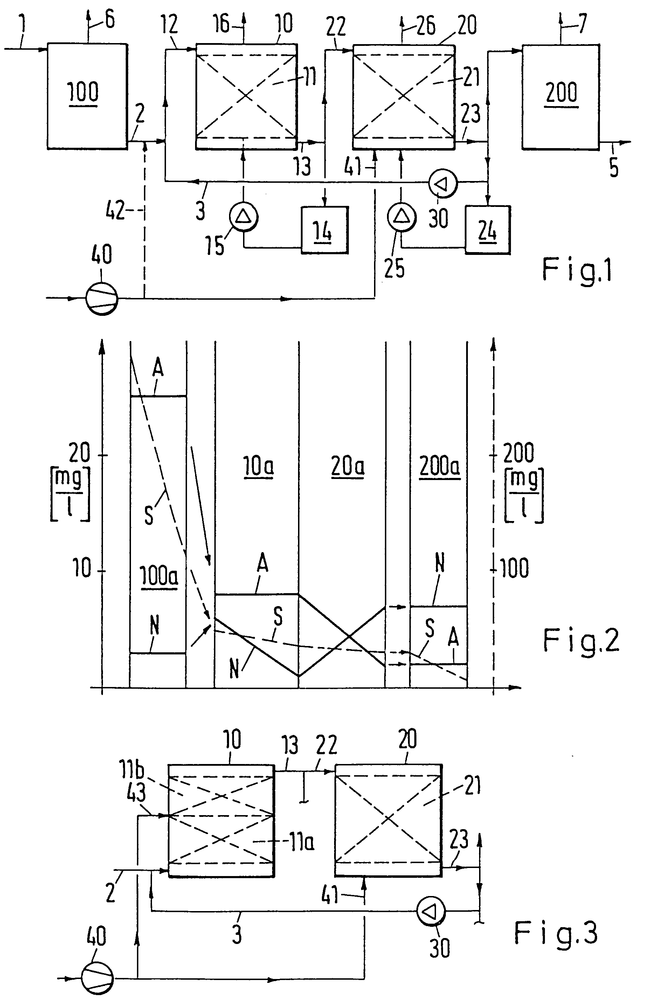

In der Anlage der Fig.1 findet die Kombination von Denitrifikation und Nitrifikation in der Einrichtung statt, die durch die Reaktionsgefässe 10 und 20 sowie die Rückführung 3 (inkl. Pumpe 30) gebildet wird. Das Rohwasser 1 durchläuft nach Eintritt in die Anlage zunächst eine Vorstufe 100, in der Schwebestoffe teilweise entfernt werden. Anschliessend wird das vorgeklärte Wasser 2 mit dem nitrathaltigen Wasser der Rückführung 3 vermischt und über den Einlauf 12 dem Reaktionsgefäss 10 der ersten Stufe mit dem unterhalb des Einlaufs angeordneten Festbett 11 zugeführt. Vom Auslauf 13 gelangt das Produktwasser der ersten Stufe über den Einlauf 22 in das zweite Reaktionsgefäss 20, wo die Nitrifikation im belüfteten Festbett 21 stattfindet. Das Produktwasser der zweiten Stufe gelangt nach dem Auslauf 23 teilweise in die Rückführung 3 und teilweise in die Filtrationsstufe 200, wo nochmals Schwebestoffe zurückgehalten werden und wo das gereinigte Wasser 5 die Anlage verlässt.

Die Zufuhr der Prozessluft 41 in die zweite Stufe erfolgt mit dem Verdichter 40. Gemäss der bekannten Lehre kann auch molekularer Sauerstoff 42 in das vorgeklärte Wasser 2 eingespeist werden, um das Sauerstoffangebot für die Kohlenstoff-Elimination in der ersten Stufe zu vergrössern. Für das Spülen der Festbette 11 und 21 sind die Pumpen 15 bzw. 25 vorgesehen, die Spülwasser aus Reservoiren 14 bzw. 24 fördern. Kompressoren für Spülluft können auch vorgesehen sein; sie sind aber in der Fig.1 nicht dargestellt. Der beim Spülen freigesetzte Überschussschlamm 16 bzw. 26 wird aus den Reaktionsgefässen 10 bzw. 20 an deren oberen Teil ausgetragen. Auch bei der vor- und nachgelagerten Stufe 100 bzw. 200 erfolgt durch intermittierendes Spülen eine Abgabe von Schlammwasser 6 bzw. 7.

Im Diagramm der Fig.2 ist anhand eines Beispiels dargestellt, wie sich die Konzentrationen der Schwebestoffe, des Nitrats und des Ammoniums beim Durchgang des zu behandelnden Wassers durch die Anlage ändern. Diese Konzentrationsverläufe sind durch die gestrichelt gezeichnete Kurve S (Schwebestoffe) sowie die ausgezogenen Kurven N (Nitrat) und A (Ammonium) gegeben. Die Abszisse des Diagramms gibt den Weg durch die Anlage an. Für die Konzentrationen des Nitrats und Ammmoniums ist ein anderer Massstab gewählt worden (ausgezogene Ordinate) als für die Konzentration der Schwebestoffe (gestrichelte Ordinate). Die Bereiche 100a, 10a, 20a und 200a des Diagramms entsprechen den vier Anlagenteilen 100, 10, 20 und 200.

Rund zwei Drittel der Schwebestoffe werden in der Vorstufe 100 zurückgehalten. Auch in den Festbetten der beiden Reaktionsgefässe 10 und 20 findet eine Reduktion des Schwebestoffgehalts statt. Wegen der Rückführung (Rezirkulation rund 300%) ergibt sich beim Übergang vom Bereich 100a in den Bereich 10a ein markanter Abfall des Schwebestoffgehalts. Entsprechende Sprungstellen weisen die Konzentrationen des Ammoniums und Nitrats auf. Wie die Kurve N zeigt, findet im Bereich 10a eine Denitrifikation und im Bereich 20a eine Nitrifikation statt. Dem Anstieg der Nitratkonzentration entsprechend weist das Ammonimum im Bereich 20a einen Abfall der Konzentration auf.

Wie schon bei der Vorstufe 100 bleiben die Nitrat- und Ammoniumkonzentrationen in der Filtrationsstufe 200 unverändert, während die Konzentration der Schwebstoffe dort weiter reduziert wird. Es ist allerdings möglich und auch bekannt, dass die nachgelagerte Filtration zu einem bioaktiven Filter weitergebildet werden kann, in welchem eine Restdenitrifikation, genährt beispielsweise durch Methanol, abläuft.

Der biologische Sauerstoffbedarf nimmt beim beschriebenen Beispiel folgende Werte an: 235 mg/l im Rohwasser 1; 45 mg/l beim Einlauf 12; 25 mg/l beim Auslauf 13; 15 mg/l beim Auslauf 23; schliesslich 8 mg/l oder weniger im gereinigten Wasser 5.

Aus der EP-A-0 247 212 ist auch ein Verfahren bekannt, bei dem die Denitrifikationsstufe 10 gemäss Fig.3 ausgebildet ist. Im Gegensatz zur Anlage gemäss Fig.1 wird hier das Festbett 11a, 11b von unten nach oben durchströmt. Für die Kohlenstoff-Elimination in einer aeroben Zone ist ein belüftetes Gebiet 11b im oberen Bereich des Festbettes (Luftzufuhr 43) vorgesehen. Im darunter liegenden, anoxischen Gebiet 11a findet die Denitrifikation statt. Nachteil bei diesem Verfahren ist, dass die Grenze zwischen der anoxischen und der aeroben Zone fest vorgegeben ist. Auf ein variables Ammoniumangebot des Rohwassers kann dabei nicht flexibel reagiert werden.

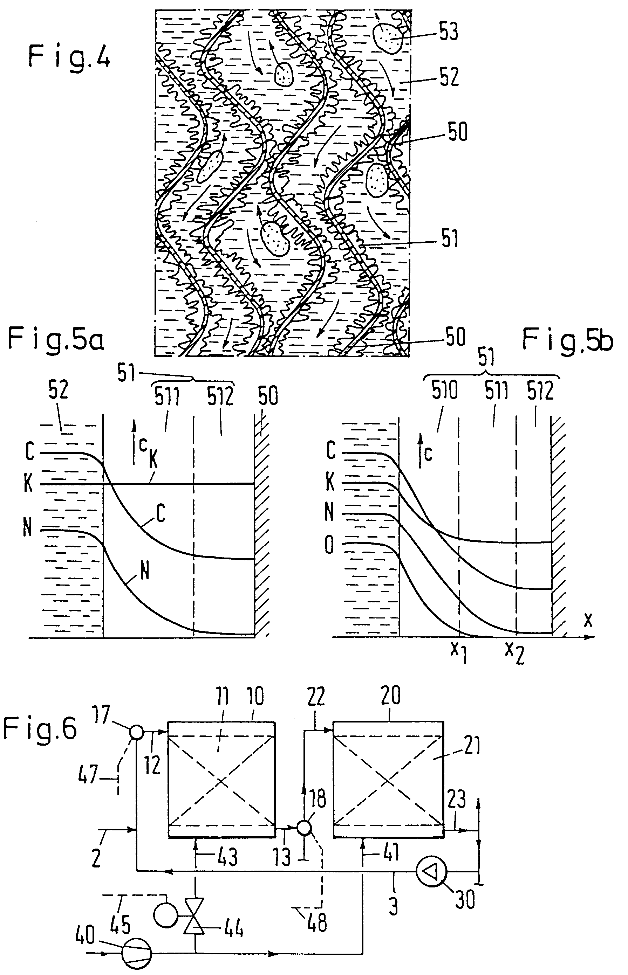

Gemäss EP-A-0 247 212 wird für die Denitrifikation im Reaktionsgefäss 10 mit Vorteil ein Filterbett aus körnigem Material vorgesehen, während für die Nitrifikation im Reaktionsgefäss 20 ein Biofilmreaktor vorzuziehen ist, bei dem die Biomasse auf statischen Mischern als Einbauten mit regelmässiger geometrischer Struktur fixiert ist. Fig.4 zeigt ausschnittsweise einen Längsschnitt, d.h. einen Schnitt in vertikaler Richtung, durch eine überflutete Packung. Die flächenartigen Elemente 50 mit regelmässiger geometrischer Struktur, durch welche die Packung gebildet wird, sind von der Biomasse 51, dem sogenannten Biofilm, rasenartig bewachsen. Das zu behandelnde Wasser 52 fliesst von oben nach unten, während im Gegenstrom Gasblasen 53 der Belüftung aufsteigen. Die Elemente 50 der Packung bestehen beispielsweise aus regelmässig gewellten Kunststoffplatten, die wechselweise solcherart angeordnet sind, dass die Wellenkämme benachbarter Elemente um einen Winkel von rund 90° gegeneinander gedreht sind. Durch die gewellten Lamellen 50 ist eine grosse Innenoberfläche (125 bis 500 $m^2/m^3$) der Packung gegeben. Die dreidimensionale Struktur der Packung ermöglicht eine effiziente Belüftung bei geringer Rückvermischung. Es sind keine Toträume vorhanden, wodurch sich eine hohe Aktivität dieses Biofilmreaktors ergibt. Die Beschickungsgeschwindigkeiten ($m^3/m^2 \cdot h = m/h$) können in weitem Bereich - der Beschaffenheit des zu behandelnden Wassers angepasst - gewählt werden: Wassergeschwindigkeit zwischen rund 1 und 20 m/h; Belüftungsgeschwindigkeit üblicherweise zwischen 5 und 20 m/h. Ein weiterer Vorteil ist der geringe Druckabfall.

Wie die Erfahrung ergeben hat, weist die Packung mit statischen Mischerelementen unerwarteterweise ein gutes Rückhaltvermögen für Schwebestoffe auf. Dank dieser Eigenschaft kann auch bei der Denitrifikation im Reaktionsgefäss 10 ein Festbett mit statischen Mischerelementen verwendet werden. Bei der erfindungsgemässen Einrichtung ist für die erste Stufe eine solche Packung vorgesehen.

Bei Biofilmreaktoren spielen Diffusionsprozesse eine wichtige Rolle. Dies wird anhand der Figuren 5a und 5b näher erläutert: Im Biofilm 51, der zur Vereinfachung und im Sinne eines Modells als Schicht konstanter Dicke angesehen wird, findet der Transport des Substrats (leicht- und schwerabbaubarer organischer Kohlenstoff) und der oxidierenden Reaktionspartner (Nitrat, molekularer Sauerstoff) zu den Mikroorganismen durch Diffusion statt. Die Profile der Konzentrationen c, die diese Stoffe aufweisen, sind durch die Kurven C, K, N und O dargestellt (entsprechend der oben angegebenen Reihenfolge). Dabei ist der Einfachheit halber angenommen, dass die Löslichkeit der Stoffe im Biofilm gleich gross wie im Wasser ist (was aber nicht der Wirklichkeit, insbesondere beim schwerabbaubaren Kohlenstoff, zu entsprechen braucht).

Im Fall der Fig.5a ist angenommen, dass kein molekularer Sauerstoff vorhanden ist. Es lassen sich im Biofilm 51 eine anoxische Schicht 511 und eine anaerobe Schicht 512 unterscheiden. Im Fall der Fig.5b kommt eine aerobe Schicht 510 hinzu. In der aeroben Schicht 510 wird der molekulare Sauerstoff (Kurve O) bei der Kohlenstoff-Elimination bis zum Versiegen (bei $x=x_1$) genutzt; das Nitrat (Kurve N) diffundiert mit praktisch konstantem Konzentrationsgradienten durch diese Schicht. Die Denitrifikation und Nutzung des Nitratsauerstoffs findet in der anoxischen Schicht 511 statt, bis bei $x=x_2$ kein Nitrat mehr vorhanden ist. Da in der anaeroben Schicht 512 auch der Nitratsauerstoff wegfällt, kann dort der leichtabbaubare Kohlenstoff (Kurve C), der bis in diese Schicht diffundiert, nicht mehr abgebaut werden. Es ist mit den Konzentrationsprofilen auch gezeigt, dass der schwerabbaubere Kohlenstoff (Kurve K) nur mit dem molekularen Sauerstoff abbaubar ist.

Bei der erfindungsgemässen Einrichtung, Fig.6, wird molekularer Sauerstoff, beispielsweise durch Zufuhr von Prozessluft 43, dosiert in das erste Reaktionsgefäss 10 eingespeist und zwar über Belüftungsdüsen, die an der unteren Seite des Festbetts 11 angeordnet sind. Diese Prozessluft 43 kann mit dem gleichen Verdichter 40, der auch die Prozessluft 41 für die zweite Stufe liefert, gefördert und beispielsweise mittels eines gesteuerten Ventils 44 dosiert werden. Durch Messung des Gehalts an organischem Kohlenstoff und/oder der Nitratkonzentration mit Sensoren 17 am Einlauf 12 und/oder Sensoren 18 am Auslauf 13 können Messsignale 47 bzw. 48 erzeugt werden, die sich in ein Steuersignal 45 für das Dosiermittel 44 umsetzen lassen. Wenn beispielsweise die Konzentrationen des Nitrats und des organischen Kohlenstoffs beim Einlauf 12 gemessen werden, so wird die benötigte Sauerstoffmenge rechnerisch bestimmt und entsprechend das Dosiermittel 44 angesteuert. Bei einer Regelung der Sauerstoffmenge mittels Messungen am Auslauf 13 wird die Steuerung solcherart ausgeführt, dass bei steigendem Kohlenstoffgehalt für eine grössere und bei steigender Nitratkonzentration für eine kleinere Luftzufuhr gesorgt wird.

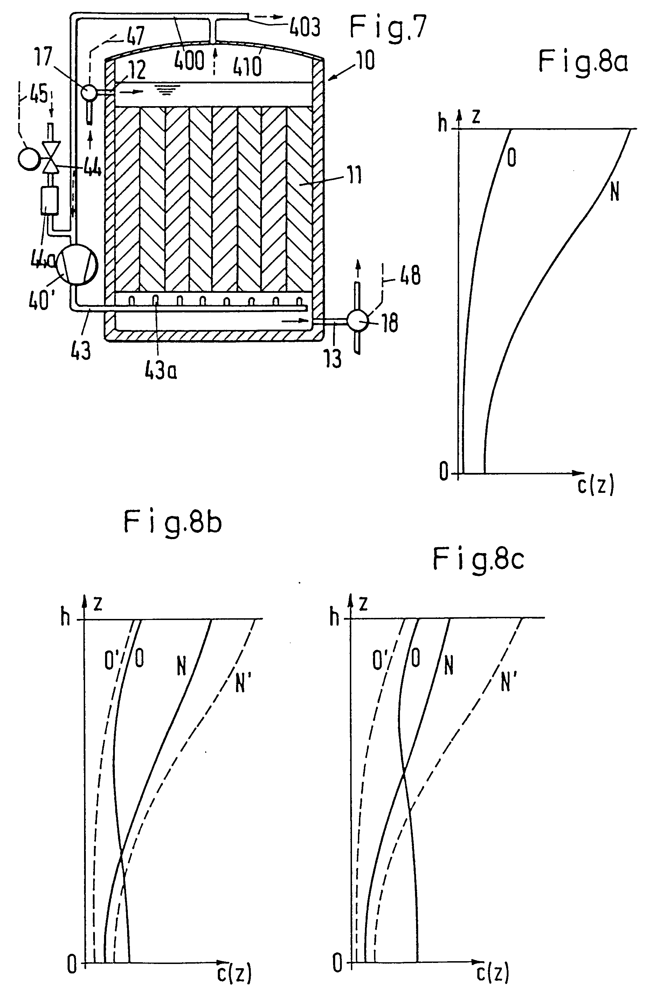

Wie bereits erwähnt hat die Belüftung auch eine vorteilhafte Wirkung auf die Denitrifikation, indem sie den Transport des Nitrats aus dem Wasser in den Biofilm fördert. Es empfiehlt sich daher, auch bei geringem Bedarf an molekularem Sauerstoff für eine wirkungsvolle Belüftung zu sorgen. Damit dabei der Sauerstoffeintrag klein bleibt, kann ein Reaktor 10 gemäss Fig.7 vorgesehen werden. Dieser Reaktor 10 kann das entsprechende Reaktionsgefäss 10 der Einrichtung der Fig.6 ersetzen. Das überflutete Festbett 11 dieses Biofilmreaktors 10 kann mit einem Gebläse 40' und über die Leitung 43 mit den Düsen 43a belüftet werden. Die Belüftungsdüsen 43a sind beim dargestellten Beispiel unterhalb des Festbetts angeordnet; es ist aber auch möglich, sie im unteren Bereich innerhalb des Festbettes vorzusehen. Über die Ansaugleitung 400 wird verbrauchte, sauerstoffarme Luft aus dem geschlossenen Reaktor 10 (Abdeckung 410) und gleichzeitig eine dosierte Menge an Umgebungsluft über das gesteuerte Ventil 44 (Durchflussmessvorrichtung 44a) durch das Gebläse 40' angesogen. Die überschüssige Luft wird über den Stutzen 403 an die Umgebung abgeblasen. Es ist zwar möglich, die Belüftung gemäss Fig.7 ohne Sauerstoffeintrag durchzuführen. Da aber der organische Kohlenstoff im allgemeinen auch schwerabbaubare Bestandteile umfasst, ist es sinnvoll, immer eine gewisse Mindestmenge an molekularem Sauerstoff über die Belüftung in die Denitrifikationsstufe einzutragen.

Die Figuren 8a bis 8b zeigen für die erfindungsgemässe Einrichtung die Konzentrationsprofile c(z) des molekularen Sauerstoffs (Kurve O) und des Nitrats (Kurve N) im Festbett 11 des ersten Reaktionsgefässes 10. Die z-Achse verläuft in der vertikalen Richtung; die untere Begrenzung des Festbetts 11 ist durch z=0 und die obere durch z=h gegeben. Die Konzentrationen c(z) sind Mittelwerte, die sich auf eine gegebene Höhe z des Festbetts 11 beziehen. Im Fall der Fig.8a erfolgt ein Sauerstoffeintrag nur über das aus der Nitrifikationsstufe rückgeführte Wasser. Daher ist nur im oberen Bereich des Festbetts eine erhöhte Sauerstoffkonzentration zu sehen. Es sei angenommmen, dass im Fall der Fig.8a die Nitratmenge für die Kohlenstoffelimination ausreicht. Fällt nun die Nitratkonzentration des zu behandelnden Wassers unter den Wert, der für die Kohlenstoffelimination benötigt wird, so wird erfindungsgemäss mittels der Belüftung molekularer Sauerstoff in das Festbett 11 eingetragen. Dies ist durch die Figuren 8b und 8c veranschaulicht. Die gestrichelt gezeichneten Kurven O' und N' sind die Kurven aus Fig.8a. Die beiden dargestellten Fälle unterscheiden sich dadurch, dass bei Fig.8c das Nitratangebot geringer ist und dass daher mittels der Belüftung eine entsprechend grössere Sauerstoffkonzentration im Festbett erzeugt wird.

Da erfindungsgemäss eine vom Nitratangebot und Sauerstoffbedarf abhängige Dosierung des molekularen Sauerstoffs vorgesehen ist, besteht eine Flexibilität, die bei dem Verfahren, das mit der in Fig.3 dargestellten Einrichtung ausgeführt wird, nicht gegeben ist. Bei variablem Gehalt an Ammonium und/oder Nitrat im Rohwasser erlaubt die Erfindung eine optimale Nutzung des Reaktionsgefässes 10, die bei den bekannten Verfahren nicht möglich ist. Es kommt hinzu, dass mittels der erfindungsgemässen Belüftung auch schwerabbaubarer Kohlenstoff im denitrifizierenden Reaktor eliminierbar ist und dass dank der erzeugten Turbulenzen der Transport des Nitrats aus dem Wasser in den Biofilm gefördert wird.

Damit möglichst viel leichabbaubarer Kohlenstoff für die Denitrifikation zur Verfügung steht, muss die Menge des mit der Rezirkulation rückgeführten, sauerstoffhaltigen Wassers möglichst klein gehalten werden. Andererseits soll aber möglichst viel Nitrat aus der zweiten in die erste Stufe gefördert werden. Es hat sich gezeigt, dass ein optimaler Wert für die Rezirkulation üblicherweise zwischen 200 und 300% liegt; eine Rezirkulation zwischen rund 100 und 400% ist jedoch auch möglich.

**Patentansprüche**

1. Verfahren zum biologischen Reinigen von Wasser, in dem organischer Kohlenstoff, Ammonium und Nitrat enthalten sind, bei welchem Verfahren in einem ersten, denitrifizierenden Reaktionsgefäss unter teils anoxischen, teils aeroben Bedingungen unter Nutzung von Nitratsauerstoff bzw. molekularem Sauerstoff der Kohlenstoff grossenteils eliminiert wird, in einem zweiten, belüfteten Reaktionsgefäss das Ammonium zumindest teilweise durch Nitrifikanten in Nitrate umgesetzt wird und nitrathaltiges Wasser aus dem zweiten in das erste Reaktionsgefäss rückgeführt wird,

   dadurch gekennzeichnet, dass das erste Reaktionsgefäss einen Biofilmreaktor bildet mit einem überfluteten Festbett (11), das aus einer Packung von flächenartigen statischen Mischelementen (50) aufgebaut ist, und dass das zu behandelnde Wasser von oben nach unten und molekularer Sauerstoff zwecks Ergänzung eines eventuellen Mankos an Nitratsauerstoff von unten nach oben durch das Festbett geführt werden, wobei die Sauerstoffzufuhr mittels Kohlenstoff- und Nitratmessung geregelt wird.

2. Verfahren nach Anspruch 1, dadurch gekennzeichnet, dass eine Dosierung des molekularen Sauerstoffs aufgrund der Konzentration gesteuert wird, welche für den organischen Kohlenstoff und/oder das Nitrat am Einlauf und/oder am Auslauf des ersten Reaktionsgefässes gemessen wird, wobei die zusätzlich benötigte Sauerstoffmenge mittels Berechnung bestimmt wird.

3. Verfahren nach Anspruch 1 oder 2, dadurch gekennzeichnet, dass die Regelung der Sauerstoffzufuhr mittels periodischer Messungen der Konzentrationen, welche der organische Kohlenstoff und das Nitrat am Auslauf des ersten Reaktionsgefässes aufweisen, durchgeführt wird.

4. Verfahren nach einem der Ansprüche 1 bis 3, dadurch gekennzeichnet, dass bezogen auf die Menge des dem Verfahren zugeführten Wasserstroms die Menge des Rücklaufstroms im Bereich zwischen 100 und 400%, vorzugsweise zwischen 200 und 300% liegt.

5. Biofilmreaktor mit überflutetem Festbett zum biologischen Reinigen von Wasser, das Nitrat und organischen Kohlenstoff enthält, durch Abbau des organischen Kohlenstoffs unter Nutzung von Nitratsauerstoff sowie von molekularem Sauerstoff, dadurch gekennzeichnet, dass das Festbett (11) aus einer Packung von flächenartigen statischen Mischelementen (50) aufgebaut ist, dass mindestens ein Einlauf (12) über dem Festbett für das zu behandelnde Wasser vorgesehen ist, dass mindestens ein Auslauf (13) unter dem Festbett und Belüftungsdüsen im unteren Bereich des Festbetts angeordnet sind, dass am Einlauf (12) und/oder am Auslauf (13) Sensoren (17;18) zum Messen der Konzentration des organischen Kohlenstoffs und/oder des Nitrats angeordnet sind und dass steuerbare Dosiermittel (44) für eine dem Kohlenstoff- und Nitratgehalt des zu behandelnden Wassers angepassten und über die Belüftungsdüsen ausgeführten Einspeisung von molekularem Sauerstoff vorgesehen sind.

6. Biofilmreaktor nach Anspruch 5, dadurch gekennzeichnet, dass die Elemente (50) der Packung aus regelmässig gewellten Kunststoffplatten bestehen, die wechselweise solcherart angeordnet sind, dass die Wellenkämme benachbarter Elemente um einen Winkel von rund 90° gegeneinander gedreht sind.

7. Einrichtung zum Durchführen des Verfahrens nach einem der Ansprüche 1 bis 4 mit einem ersten Reaktionsgefäss (10), das einen Biofilmreaktor gemäss Anspruch 5 bildet, mit einem zweiten, in Serie angeordneten Reaktionsgefäss (20), das ebenfalls einen Biofilmreaktor mit überflutetem Festbett (21) bildet, mit einer Rückführung (3) vom Auslauf (23) des zweiten zum Einlauf (12) des ersten Gefässes und mit Mitteln (14,15;24,25) zum Spülen der Festbetten.

8. Einrichtung nach Anspruch 7, dadurch gekennzeichnet, dass die Festbettspülung mindestens eine Pumpe (15;225) für Spülwasser und mindestens einen Kompressor für Spülluft umfasst.

9. Anlage zum Reinigen von Abwasser mit einer Einrichtung (10,20,3) nach einem der Ansprüche 7 oder 8, dadurch gekennzeichnet, dass dem ersten Reaktionsgefäss (10) eine Vorstufe (100) zum Entfernen von Schwebestoffen vorgelagert ist und dem zweiten Reaktionsgefäss eine Filtrationsstufe (200) nachgelagert ist.

10. Anlage nach Anspruch 9, dadurch gekennzeichnet, dass in der nachgelagerten Filtrationsstufe (200) eine Restdenitrifizierung durchführbar ist.

**Claims**

1. A process for the biological purification of water, in which organic carbon, ammonium and nitrate are contained, during which process the carbon is eliminated to a great extent in a first, denitrifying reaction vessel partly under anoxic and partly under aerobic conditions with the use of nitrate-containing oxygen and molecular oxygen respectively, the ammonium is at least partially converted into nitrates by nitric bacteria in a second, ventilated reaction vessel and nitrate-containing water is returned from the second into the first reaction vessel,
   **characterised in that** the first reaction vessel forms a biofilm reactor having a flooded fixed bed (11) which is constructed from a packing of laminar static mixer components (50),
   **and in that** the water to be treated is conveyed through the fixed bed from the top to the bottom and molecular oxygen for the purpose of supplementing a possible deficiency of nitrate-containing oxygen is conveyed through the fixed bed from the bottom to the top, with the supply of oxygen being regulated by means of the measurement of carbon and nitrate.

2. A process according to Claim 1,
   **characterised in that** a metering of the molecular oxygen is controlled on the basis of the concentration, which is measured for the organic carbon and/or the nitrate at the inlet and/or at the outlet of the first reaction vessel, the amount of oxygen additionally required being determined by means of calculation.

3. A process according to Claim 1 or 2,
   **characterised in that** the regulation of the oxygen supply is performed by means of periodic measurements of the concentrations which the organic carbon and the nitrate have at the outlet of the first reaction vessel.

4. A process according to one of Claims 1 to 3,
   **characterised in that** related to the quantity of the water flow supplied to the process, the quantity of the return flow lies in the range between 100 and 400 %, preferably between 200 and 300 %.

5. A biofilm reactor having a flooded fixed bed for the biological purification of water, which contains nitrate and organic carbon, by the decomposition of the organic carbon using nitrate-containing oxygen and also molecular oxygen,
characterised in that the fixed bed (11) is constructed from a packing of laminar static mixer components (50), in that at least one inlet (12) is provided over the fixed bed for the water to be treated,
in that at least one outlet (13) is disposed under the fixed bed and ventilating jets are disposed in the lower region of the fixed bed,
in that at the inlet (12) and/or at the outlet (13) sensors (17; 18) are disposed for measuring the concentration of the organic carbon and/or of the nitrate,
and in that controllable metering means (44) are provided for the introduction of molecular oxygen adapted to the nitrate content of the water to be treated and performed via the ventilating jets.

6. A biofilm reactor according to Claim 5,
characterised in that the components (50) of the packing consist of regularly corrugated plastics plates, which are alternately arranged in such a manner that the wave crests of adjacent components are rotated with respect to one another by an angle of roughly 90°.

7. An installation for performing the process according to one of Claims 1 to 4 with a first reaction vessel (10), which forms a biofilm reactor as specified in Claim 5, having a second reaction vessel (20) arranged in series, which also forms a biofilm reactor having a flooded fixed bed (21), having a recirculating line (3) from the outlet (23) of the second vessel to the inlet (12) of the first vessel and having means (14, 15; 24, 25) for flushing the fixed beds.

8. An installation according to Claim 7,
characterised in that the fixed bed flushing system comprises at least one pump (15; 225) for flushing water and at least one compressor for scavenging air.

9. A plant for the purification of waste water with an installation (10, 20, 3) according to one of Claims 7 or 8,
characterised in that in front of the first reaction vessel (10) a preliminary stage (100) is connected for the removal of suspended solids and after the second reaction vessel a filtration stage (200) is connected.

10. A plant according to Claim 9,
characterised in that residual denitrification can be performed in the following filtration stage (200).

## Revendications

1. Procédé de purification biologique de l'eau, dans laquelle sont contenus du carbone organique, de l'ammonium et du nitrate, procédé pour lequel dans un premier récipient de réaction, à fonction de dénitruration, on élimine la plus grande partie du carbone, dans des conditions partiellement anoxiques, partiellement aérobies, avec utilisation de l'oxygène du nitrate, respectivement de l'oxygène moléculaire, dans un deuxième récipient de réaction aéré, on convertit l'ammonium au moins partiellement par des nitrifiants en des nitrates et l'on recycle l'eau contenant les nitrates, issue du deuxième récipient de réaction, vers le premier récipient de réaction, caractérisé en ce que le premier récipient de réaction constitue un réacteur à biofilm, avec un lit fixe (11) submergé, constitué d'un garnissage fait d'éléments mélangeurs (50) statiques, du genre à surface, et en ce que l'eau a traiter est guidée depuis le haut vers le bas et l'oxygène moléculaire est guidé du bas vers le haut en vue d'assurer le complément d'un éventuel manque en oxygène du nitrate, en passant à travers le lit fixe, l'apport d'oxygène étant régulé par mesure de l'oxygène et des nitrates.

2. Procédé selon la revendication 1, caractérisé en ce qu'un dosage de l'oxygène moléculaire est commandé, sur la base de la concentration, que l'on mesure pour le carbone Organique et/ou le nitrate, à l'introduction et/ou à l'évacuation du premier récipient de réaction, la quantité d'oxygène supplémentaire nécessaire étant déterminée par le calcul.

3. Procédé selon la revendication 1 ou 2, caractérisé en ce que la régulation de l'apport en oxygène est effectuée par des mesures périodiques des concentrations que présentent l'oxygène organique et le nitrate à la sortie du premier récipient de réaction.

4. Procédé selon l'une des revendications 1 à 3, caractérisé en ce que la quantité du débit recirculé, par rapport à la valeur du débit d'eau amené au procédé, est située dans la plage comprise entre 100 et 400 %, de préférence entre 200 et 300 %.

5. Réacteur à biofilm à lit fixe submergé, pour la purification biologique de l'eau, qui contient du nitrate et du carbone organique, par décomposition du carbone organique avec utilisation de l'oxygène du nitrate ainsi que de l'oxygène moléculaire, caractérisé en ce que le lit fixe (11) est constitué d'un garnissage d'éléments mélangeurs (50) statiques du type à surface, en ce qu'au moins une introduction (12) est prévue sur le lit fixe, pour l'eau à traiter, en ce qu'au moins une évacuation (13) est disposée sous le lit fixe et des buses d'aération sont disposées dans la zone inférieure du lit fixe, en ce qu'à l'introduction (12) et/ou à l'évacuation (13) sont disposés des capteurs (17; 18) pour la mesure de la concentration du carbone organique et/ou du nitrate, et en ce que les moyens de dosage (44) pouvant être commandés sont prévus, pour effectuer une injection d'oxygène moléculaire, injection réalisée de façon adaptée à la teneur en carbone et en nitrate dans l'eau a traiter et par l'intermédiaire des buses d'aération.

6. Réacteur à biofilm selon la revendication 5, caractérisé en ce que les éléments (50) du garnissage sont constitués de plaques de matière synthétique ondulées régulièrement qui sont disposées alternativement de manière que les indentations d'ondulations d'éléments voisins soient tournées les unes par rapport aux autres d'un angle d'environ 90°.

7. Dispositif de mise en oeuvre du procédé selon l'une des revendications 1 à 4 avec un premier récipient de réaction (10), constituant un réacteur à biofilm selon la revendication 5, avec un deuxième récipient de réaction (20) disposé en série, qui constitue également un réacteur à biofilm avec un lit fixe (21) submergé, avec un recyclage (3) allant de l'évacuation (23) du deuxième récipient à l'introduction (12) du premier récipient, et avec des moyens (14, 15; 24, 25) destinés à assurer le rinçage des lits fixes.

8. Dispositif selon la revendication 7, caractérisé en ce que le rinçage des lits fixes comprend au moins une pompe (15; 225) véhiculant l'eau de rinçage et au moins un compresseur pour l'air de rinçage.

9. Installation de purification d'eau usée avec un dispositif (10, 20, 3) selon l'une des revendications 7 ou 8, caractérisé en ce que l'on monte en amont du premier récipient de réaction (10), un étage préliminaire (100), destiné à éliminer les matières en suspension et l'on monte, en aval du deuxième récipient de réaction, un étage de filtration (200).

10. Installation selon la revendication 9, caractérisée en ce qu'une dénitruration résiduelle peut être conduite dans l'étage de filtration (200) monté en aval.

Fig.1

Fig.2

Fig.3

Fig.4

Fig.5a

Fig.5b

Fig.6

Fig.7

Fig.8a

Fig.8b

Fig.8c